# EUROPEAN PATENT APPLICATION

(11) **EP 2 527 929 A1**
(43) Date of publication of application: **28.11.2012**
(21) Application number: 11275069.0
(22) Date of filing: 28.04.2011
(51) Int. Cl.: G03H 1/22, G02B 26/06, G03B 21/00, G02B 27/01, G02B 27/00

(54) **Projection apparatus**

(71) Applicant: BAE Systems Plc, London SW1Y 5AD (GB)
(72) Inventor: The designation of the inventor has not yet been filed
(74) Representative: BAE SYSTEMS plc Group IP Department

(57) **Abstract**

The present invention relates to projection apparatus 10 comprising: an optical fourier processor 18 for receiving image data from a digital image processor 30 and modulating substantially coherent light incident thereon for generating image bearing light in accordance with the image data; a light source 12 for generating substantially coherent light 14; a first lens 16 for expanding the light from the light source for illuminating the optical fourier processor, the first lens having a first focal point F1; a second lens 24 between the first lens and the optical fourier processor and having a second focal point F2 which is spaced away from the first focal point on a side thereof distal to the second lens by an amount which is selected to cause light passing through the second lens to follow a divergent path to the optical fourier processor; a turning mirror 20 having an aperture through which light from the light source can pass towards the optical fourier processor and for turning image bearing light reflected from the optical fourier processor onto an image plane 36.

## Description

The present invention relates to projection apparatus suitable for use in a display unit such as a head up display, a helmet mounted display or a head mounted display.

Although the invention has general applicability in the field of projecting images, the projector described herein may form part of an avionics display unit for an aircraft. The subsystems of such a display unit are an electronics subsystem, which may include a digital signal processor, a projection apparatus, an injection or relay optics subsystem and one or more waveguides. The electronics subsystem provides the electrical power handling and image generation. The projection apparatus converts the electrical signals provided by the electronic subsystem into an optical image which is propagated into the injection optics subsystem. The injection optics subsystem translates the near field image formed by the projector into a far field image. This image is then injected into the waveguides. The waveguides transmit the resulting image into a format that can be viewed or read by a pilot as an overlay to the pilot's normal vision outside of the helmet or cockpit.

The present invention is concerned with projection apparatus which may be used for example in an avionics display unit.

Known projection apparatus consists of a laser, optical elements, such as mirrors, and an optical Fourier processor. For certain optical arrangements the relationship between an image and its hologram is such that the image is the Fourier transform of the hologram. Thus it is possible to define a desired image, for example symbols for a display and to compute the inverse Fourier transform of the desired image to determine a hologram. If the hologram is then prepared and introduced into an appropriate display system the desired image will then be displayed for viewing by an observer. Fourier generators, or processors, are described in W02005/059881 and W02005/059660. The Fourier projector may comprise a Liquid Crystal on Silicon display (LCOS) or Spatial Light Modulator (SLM).

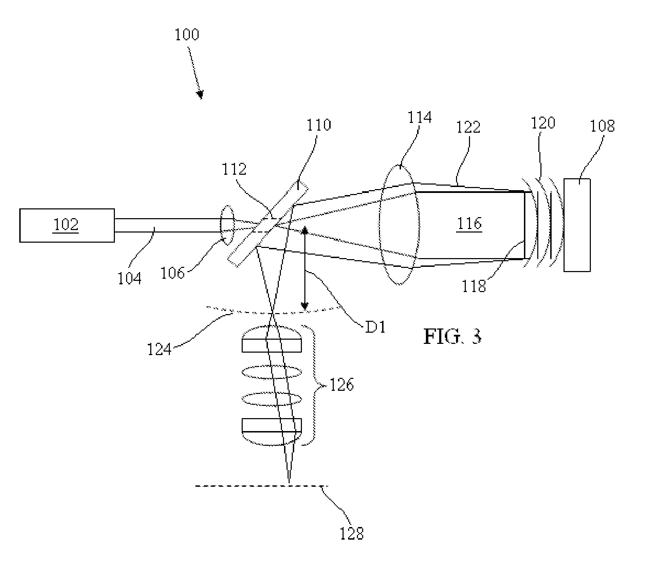

A know projection apparatus 100 will now be described in more detail with reference to Figure 3. The apparatus comprises a source of coherent monochromatic light such as a laser source for generating a beam of light 104. The light is directed towards a first lens 106 which serves either to focus or to defocus the light for expanding the beam onto the screen of a projector 108. In this example, lens 106 serves to focus the light at the central plane of a turning mirror 110. The turning mirror 110 has an aperture 112 which allows focused light to pass through the mirror towards a second lens 114. The second lens 114 has a focal point at the central plane of the mirror 110 (i.e. at the focal point of the first lens 106) and is configured to collimate the light and direct it towards the projector 108. The collimated light 116 forms a plane wave front at the projector represented in the Figure by three parallel lines 118. The projector performs a Fourier transform and also imparts a lens function upon the return wave front shown in the Figure by three curves 120. The lens function serves to diverge the returned image bearing light 122 towards the lens 114. The lens causes some convergence of the image bearing light 122 onto the turning mirror focusing the light at a curve 124 at a distance D1 from the mirror as shown. The curve 124 requires correction prior to projection. The image is scaled and converted into a usable image after the image plane by a secondary lens group 126, which is required to remove aberrations created by the optical train, particularly spherical aberration caused by the projector and to flatten the curve 124 to produce image plane 128. The aperture 112 in mirror 110 serves to filter out the undiffracted light returning from the projector.

The lens group 126 is relatively costly, as well increasing the size of the projection apparatus. The apparatus also suffers from reduced brightness as the centre of a projected image caused by the removal of diffracted light by the aperture 112 in the turning mirror 110.

It is an object of the invention to provide an improved projection apparatus.

According to the present invention there is provided apparatus comprising: an optical fourier processor for receiving image data from a digital image processor and modulating substantially coherent light incident thereon for generating image bearing light in accordance with the image data; a light source for generating substantially coherent light; a first lens for expanding the light from the light source for illuminating the optical fourier processor, the first lens having a first focal point; a second lens between the first lens and the projector and having a second focal point which is spaced away from the first focal point on a side thereof distal to the second lens by an amount which is selected to cause light passing through the second lens to follow a divergent path to the optical fourier processor; a turning mirror having an aperture through which light from the light source can pass towards the optical fourier processor and for turning image bearing light reflected from the optical fourier processor onto an image plane.

The present invention also provides a head up display unit, a head mounted display unit or a helmet mounted display unit comprising such a projection apparatus.

The present invention also provides a method of modifying a projection apparatus, the apparatus comprising: an optical fourier processor for receiving image data from a digital image processor and modulating substantially coherent light incident thereon for generating image bearing light in accordance with the image data; a light source for generating substantially coherent light; a first lens for expanding the light from the light source for illuminating the optical fourier processor, the first lens having a first focal point; a second lens between the first lens and the projector and having a second focal point coincident with the first focal point for collimating light conveyed towards the optical fourier processor; a turning mirror having an aperture through which light from the light source can pass towards the optical fourier processor and for turning image bearing light reflected from the optical fourier processor onto an image plane; and a secondary lens group for correcting aberration generated in the image formed at the image plane, wherein the method comprises: moving the second lens towards the turning mirror so that the second focal point is located on a side of the first focal point which is distal from the second lens thereby causing divergence of light conveyed from the second lens to the optical fourier processor and increasing the distance between the mirror and the image plane; and removing the secondary lens group from the apparatus.

In order that the invention may be more clearly understood reference will now be made to the accompanying drawings, given by way of example only, in which:
Figure 1 is a schematic view of a projection apparatus;
Figure 2 is a schematic view of a second projection apparatus; and
Figure 3 is a schematic view of a known projection apparatus.

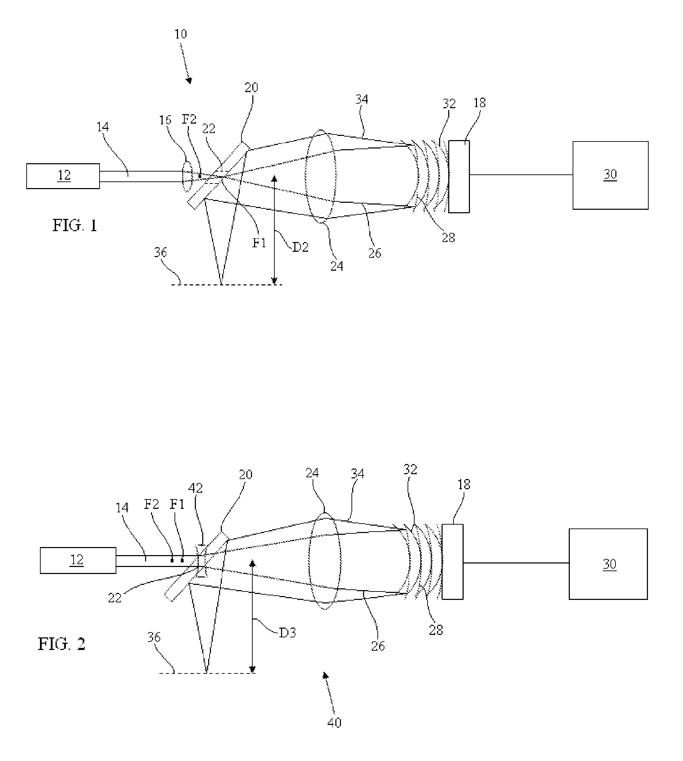

Referring to Figure 1, a projection apparatus 10 is shown which comprises a source 12 of coherent monochromatic light such as a laser source for generating a beam of coherent or substantially coherent light 14. The light is directed towards a first lens 16 which serves to focus light which subsequently expands for filling the screen of a projector 18. The lens 16 serves to focus the light at F1 in a plane of a turning mirror 20. The turning mirror 20 has an aperture 22 which allows focused light to pass through the mirror towards a second lens 24. The second lens 24 has a focal point which is not coincident with the focal point of the first lens 16. Instead, the focal point F2 of the second lens 24 is spaced away from the first focal point on a side thereof distal to the second lens. In this example showing a convex first lens, the focal point F2 is located between the focal point of the first lens and the first lens itself, and on a distal side of the turning mirror 20 from the second lens. The effect of locating the focal point F2 away from the focal point F1 is that the second lens does not collimate light as is the case with the known arrangement shown in Figure 3. Instead, the second focal point F2 is spaced away from the first focal point F1 by an amount which is selected to cause light passing through the second lens to follow a divergent path 26 to the projector. Accordingly, the light beam has a spherical wave front as represented by three curves 28 shown in Figure 1.

When incident on the projector 18, in the case of a SLM, a Fourier transform is performed generating an hologram according the image data received from a processor 30. The projector also imparts a lens function upon the return wave front shown in the Figure by four curves 32. The lens function also serves to diverge the returned image bearing light 34 towards the lens 24. In this way, the returned light 34 has greater convergence than is the case with the returned light 122 shown in Figure 3. The consequence of this greater divergence is that when the light has returned through lens 24 a greater area of the turning mirror is illuminated with image bearing light and the image plane 36 is spaced a distance D2 away from the mirror. It will be seen that D2 is greater than D1 shown in Figure 1. Since a greater area of the mirror is illuminated and the image plane is further away from the mirror, the brightness at the centre of the projected image is reduced to a lesser extent compared to the known projection apparatus shown in Figure 3. Additionally, aberration of the image at the image plane 36 is reduced to an extent that a secondary lens group is not required for correction. Further, the image is focused at the image plane 36 and therefore does not require flattening and is the case with the known arrangement shown in Figure 3.

The focal point F2 of the second lens 24 can be shifted to the left as shown in Figure 1 by movement of the second lens to the left compared to the arrangement shown in Figure 3. This movement of the second lens reduces the size of the projection apparatus, which is particularly useful where the apparatus is used in a space constrained environment, such as in the cockpit of an aircraft, or in a head or helmet mounted display.

Alternatively, the known second lens 114 can be replaced with a lens 24 of increased focal length, thereby shifting the focal point away from the second lens and causing divergence of light beam 26.

The spacing of focal point F2 from the focal point F1 is selected according to characteristics of the projection apparatus to optimise the final image. For example, it is desirable to illuminate fully the projector 18 with coherent light to achieve acceptable brightness in the final image. If the focal point F2 is spaced from focal point F1 by greater than a certain amount, light passing through the will diverge beyond the outer perimeter of the projector and therefore the optical power of the arrangement will be reduced. It is also beneficial that all or substantially all of the image bearing light returned from the projector is directed towards and focused at the image plane 36, and too much divergence of beam 26 will cause light to be lost at the second lens 24 or at the mirror 20. Therefore, the focal point F2 is spaced from the focal point F1 by an amount which is selected to capture the light within the system and yet also provide an increased distance D2 (compared to D1 in Figure 3) between the mirror and the image plane and also improve brightness at the centre of the image.

A second projection apparatus 40 is shown in Figure 2. The projection apparatus 40 is similar in construction to projection apparatus 10 except that first lens 20 in Figure 1 is replaced by first lens 42 in Figure 2. Therefore, for brevity, only those aspects of the Figure 2 arrangement which differ from the first arrangement will be explained, whilst like elements will be given like references.

Referring to Figure 2, in projection apparatus 40, light is directed from the light source towards first lens 42 which serves to diverge the light causing the expansion required to illuminate fully the active holographic forming area of the projector 18. Lens 42 is concave and has a focal point F1 causing divergence of the light beam 14 through aperture 22 towards the second lens 24. The second lens 24 has a focal point which is not coincident with the focal point of the first lens 16. Instead, the focal point F2 of the second lens 24 is spaced away from the first focal point F1 on a side thereof distal to the second lens. In this example showing a concave first lens, the focal point F2 is located on a side of the focal point F1 distal to the first lens 42. The effect of locating the focal point F2 away from the focal point F1 is that the second lens does not collimate light as is the case with the known arrangement shown in Figure 3. Instead, the second focal point F2 is spaced away from the first focal point F1 by an amount which is selected to cause light passing through the second lens to follow a divergent path 26 to the projector. Accordingly, the light beam has a spherical wave front as represented by three curves 28 shown in Figure 2.

In this way, the light 34 returned from the projector has greater convergence than is the case with the returned light 122 shown in Figure 3. The consequence of this greater divergence is that when the light has returned through lens 24 a greater area of the turning mirror is illuminated with image bearing light and the image plane 36 is provided an increased distance D3 from the mirror, wherein D3 is greater than D1. Since a greater area of the mirror is illuminated and the image plane is further away from the mirror, the brightness at the centre of the projected image is reduced to a lesser extent compared to the known projection apparatus shown in Figure 3. Additionally, the image plane 36 does not require flattening and aberration of the image at the image plane 36 is reduced to an extent that a secondary lens group is not required for correction.

It will be appreciated from the foregoing description of Figures 1 and 2 that a display unit comprising such a projection apparatus allows the image formed at the image plane to be input directly into one or more waveguides for displaying the image, without the requirement and expense of the secondary lens group shown in Figure 3.

The present invention also relates to a method of modifying, or retro-fitting, a known projection apparatus of the type shown in Figure 3, comprising: a projector for receiving image data from a digital image processor and modulating substantially coherent light incident thereon for generating image bearing light in accordance with the image data; a light source for generating substantially coherent light; a first lens for expanding the light from the light source for illuminating the projector, the first lens having a first focal point; a second lens between the first lens and the projector and having a second focal point coincident with the first focal point for collimating light conveyed towards the projector; a turning mirror having an aperture through which light from the light source can pass towards the projector and for turning image bearing light reflected from the projector onto an image plane; and a secondary lens group for correcting aberration generated in the image formed at the image plane. The method comprises moving the second lens towards the turning mirror so that the second focal point is located on a side of the first focal point which is distal from the second lens thereby causing divergence of light conveyed from the second lens to the projector and increasing the distance between the mirror and the image plane; and removing the secondary lens group from the apparatus.

The invention has been described above with respect to preferred embodiments. It will be understood by those skilled in the art that changes and modifications may be made thereto without departing from the scope of the invention as set out in the appended claims.

## Claims

**1.** Projection apparatus comprising:
an optical fourier processor for receiving image data from a digital image processor and modulating substantially coherent light incident thereon for generating image bearing light in accordance with the image data;
a light source for generating substantially coherent light;
a first lens for expanding the light from the light source for illuminating the optical fourier processor, the first lens having a first focal point;
a second lens between the first lens and the optical fourier processor and having a second focal point which is spaced away from the first focal point on a side thereof distal to the second lens by an amount which is selected to cause light passing through the second lens to follow a divergent path to the optical fourier processor;
a turning mirror having an aperture through which light from the light source can pass towards the optical fourier processor and for turning image bearing light reflected from the optical fourier processor onto an image plane.

**2.** Projection apparatus as claimed in claim 1, wherein the first lens is convex and the focal point of the second lens is located between the first focal point and the first lens.

**3.** Projection apparatus as claimed in claim 1, wherein the first lens is concave and the focal point of the second lens is located on a side of the first focal point distal from the first lens.

**4.** Projection apparatus as claimed in any of the preceding claims, wherein the spacing between said first focal point and the second focal point is selected so that substantially all of the light passing through the second lens is incident on the active area of the optical fourier processor.

**5.** Projection apparatus as claimed in any of the preceding claims, wherein the spacing between said first focal point and the second focal point is selected so that substantially all of the light returned from the optical fourier processor is focused at the image plane.

**6.** Projection apparatus as claimed in any of the preceding claims, wherein the light passing through the second lens is arranged to have a spherical wavefront when incident on the optical fourier processor.

**6.** A display unit comprising a projection apparatus as claimed in any of the preceding claims, wherein the image formed at the image plane is substantially free of aberration.

**7.** A head up display unit, a head mounted display unit or a helmet mounted display unit comprising the projection apparatus as claimed in any of the preceding claims.

**8.** A method of modifying a projection apparatus, the apparatus comprising:
an optical fourier processor for receiving image data from a digital image processor and modulating substantially coherent light incident thereon for generating image bearing light in accordance with the image data;
a light source for generating substantially coherent light;
a first lens for expanding the light from the light source for illuminating the optical fourier processor, the first lens having a first focal point;
a second lens between the first lens and the projector and having a second focal point coincident with the first focal point for collimating light conveyed towards the optical fourier processor;
a turning mirror having an aperture through which light from the light source can pass towards the optical fourier processor and for turning image bearing light reflected from the optical fourier processor onto an image plane; and
a secondary lens group for correcting aberration generated in the image formed at the image plane,
wherein the method comprises:
moving the second lens towards the turning mirror so that the second focal point is located on a side of the first focal point which is distal from the second lens thereby causing divergence of light conveyed from the second lens to the optical fourier processor and increasing the distance between the mirror and the image plane; and
removing the secondary lens group from the apparatus.
